# EUROPÄISCHE PATENTSCHRIFT

(11) **EP 2 736 026 B1**
(45) Veröffentlichungstag und Bekanntmachung des Hinweises auf die Patenterteilung: **25.03.2020**
(21) Anmeldenummer: 12194205.6
(22) Anmeldetag: 26.11.2012
(51) Int. Cl.: G07F 19/00

(54) **Vorrichtung zum Auslesen einer Magnetstreifen- und/oder Chipkarte mit einer Kamera zur Detektion von eingeschobenen Skimmingmodulen**
Device for reading out a magnetic strip and/or chip card with a camera for detecting inserted skimming modules
Dispositif de lecture de cartes à puce et/ou à bandes magnétiques avec une caméra pour la détection de modules de skimming intégrés

(43) Veröffentlichungstag der Anmeldung: 28.05.2014
(73) Patentinhaber: Wincor Nixdorf International GmbH, 33106 Paderborn (DE)
(72) Erfinder: Schliebe, Dieter, 33181 Bad Wünnenberg (DE); Drichel, Alexander, 33613 Bielefeld (DE); Priesterjahn, Steffen, 33100 Paderborn (DE); Wiesinger, Torsten, 74199 Untergruppenbach (DE)

(56) Entgegenhaltungen:
- EP-A2- 1 901 205
- WO-A1-2012/114106
- DE-A1-102009 018 319
- JP-A- H08 313 222
- JP-A- S60 220 808
- US-A1- 2009 201 372

## Beschreibung

Die Erfindung betrifft eine Vorrichtung zum Lesen einer Magnetstreifen- und/oder Chipkarte, die einen Kartenleser zum Auslesen von Daten aus einer Magnetstreifen- und/oder Chipkarte umfasst, der einen Transportweg hat, entlang dessen die Magnetstreifen- und/oder Chipkarte beim Einführen in den Kartenleser und/oder Entnehmen aus dem Kartenleser bewegt wird. Ferner hat die Vorrichtung eine Bildaufnahmeeinheit zur Aufnahme von Bildern des Kartenlesers.

Solche Vorrichtungen zum Auslesen von Magnetstreifen- und/oder Chipkarten werden insbesondere in Geldautomaten, automatischen Kassensystemen, automatischen Tresorkassen und Bezahlterminals eingesetzt. Bei der Magnetstreifen- und/oder Chipkarte handelt es sich insbesondere um eine EC-Karte oder eine Kreditkarte, mit deren Hilfe eingekaufte Waren bezahlt werden oder Geld abgehoben werden soll. Um an die Kontodaten, die auf der Magnetstreifen- und/oder Chipkarte gespeichert sind und die, zugehörige PIN zu gelangen werden, illegale Skimmingangriffe durchgeführt, bei denen vor dem Schlitz, in dem die Magnetstreifen- und/oder Chipkarte eingeführt wird, ein sogenanntes Skimmingmodul vorgesehen wird, mit dessen Hilfe die Daten der Magnetstreifen- und/oder Chipkarte ausgelesen werden. Zusätzlich wird die PIN, beispielsweise mit einer verdeckt angebrachten Kamera oder einer Manipulation der Tastatur erspäht, sodass die diesen Skimmingangriff durchführende Person sowohl die Daten der Magnetstreifen- und/oder Chipkarte als auch den zugehörige PIN kennen und somit unberechtigt Geld abheben oder Einkäufe tätigen kann.

Zur Abwehr solcher Skimmingangriffe ist es aus dem Dokument DE 10 2011 001 541 A1 bekannt, an einem Geldautomaten eine Kamera vorzusehen, mit deren Hilfe der Aufenthaltsbereich vor dem Geldautomaten erfasst wird. Mit Hilfe von Bildverarbeitungsprogrammen wird ermittelt, ob in den Aufenthaltsbereich zusätzlich zu der den Geldautomaten bedienenden Person sich eine weitere Person aufhält, die eventuell versuchen könnte, Daten auszuspähen. Das Bild der Kamera kann beispielsweise in Display des Geldautomaten eingeblendet werden.

Aus dem Dokument DE 10 2011 010 737 A1 ist es bekannt, zur Skimmingabwehr in vorgegebenen Zeitabständen und/oder nach Bewegung von Objekten im Bereich vor dem Automaten mit Hilfe einer Kamera ein Bild des Geldautomaten aufzunehmen und dieses mit einem Soll-Bild zu vergleichen. Über den Bildvergleich kann ermittelt werden, ob Gegenstände, insbesondere Skimmingmodule, unerlaubterweise an dem Geldautomaten angebracht wurden.

Weitere Verfahren zur Skimmingabwehr, bei dem die Geldautomaten selbst oder der Bereich vor dem Geldautomaten mit Hilfe einer Kamera überwacht wird, sind beispielsweise aus den Dokumenten DE 10 2010 036 961 A1, DE 10 2009 018 322 A1 und DE 10 2009 081 320 A1 bekannt.

All diesen bekannten kamerabasierten Skimmingabwehrverfahren ist gemeinsam, dass mit Hilfe der Kamera nur der äußere Bereich des Geldautomaten bzw. der Vorrichtung, in der die Vorrichtung zum Lesen der Magnetstreifen- und/oder Chipkarten eingebaut ist, überwacht wird.

Um solche Skimmingabwehrverfahren zu umgehen werden neuerdings Miniaturskimmingmodule in den Transportweg des Kartenlesers, insbesondere in den Schlitz, in den auch die Magnetstreifen- und/oder Chipkarte eingeführt wird, eingeführt. Über diese Miniaturskimmingmodule werden die Daten ausgelesen. Solche in den Kartenleser eingeführten Skimmingmodule können mit bekannten Skimmingabwehrverfahren nicht erkannt werden.

Aus dem Dokument DE 10 2009 018 319 A1 ist es bekannt, bei einem Geldautomaten den Bedienbereich mit Hilfe von Kameras zu überwachen, und hierüber Manipulationsversuche zu detektieren.

Das Dokument US 2009/201372 A1 beschreibt die Überwachung der Außenseite eines Geldautomaten mit Hilfe von Kameras, um hierüber ebenfalls Manipulationsversuche erkennen zu können.

Dokument WO 2012/114106 A1 offenbart eine Vorrichtung und ein Verfahren zum Überwachen eines Kartenschlitzes eines Kartenlesers. Das von einer Lichtquelle ausgesandte Licht wird mit Hilfe eines Lichtsensors erfasst, wobei die Lichtquelle und der Lichtsensor an gegenüberliegenden Seiten des Kartenschlitzes angeordnet sind. Eine Steuereinheit detektiert das Vorhandensein eines Objekts oder Gerätes in dem Kartenschlitz. Dokument EP 1 901 205 A2 offenbart einen Kartenleser, bei dem ein Bereich des Kartenlesers mit Hilfe von Lichtstrahlen überwacht wird. Die Lichtstrahlen werden von einem Emitter auf der einen Seite des Transportpfades emittiert und treffen auf einen Sensor auf der anderen Seite des Transportpfads.

Es ist Aufgabe der Erfindung, eine Vorrichtung zum Lesen einer Magnetstreifen- und/oder Chipkarte anzugeben, mit deren Hilfe in den Transportweg des Kartenlesers der Vorrichtung eingeführte Skimmingmodule auf einfache Weise sicher detektiert werden können.

Diese Aufgabe wird hier in der Vorrichtung mit den Merkmalen des Anspruchs 1 gelöst. Vorteilhafte Weiterbildungen der Erfindung sind in den abhängigen Ansprüchen angegeben.

Erfindungsgemäß ist der Kartenleser derart ausgebildet, dass mit Hilfe von durch die Kamera aufgenommenen Bildern detektierbar ist, ob im Transportweg des Kartenlesers ein Skimmingmodul zum Ausspähen von Daten der Magnetstreifen- und/oder Chipkarte aufgenommen ist. Dadurch dass der Kartenleser konstruktiv so gebaut ist, dass mit Hilfe der Kamera auch erkannt werden kann, ob ein Skimmingmodul innerhalb des Transportweges des Kartenlesers aufgenommen ist, können auch die neuartigen in den Schlitz des Kartenlesers eingeführten Miniaturskimmingmodule über die Kamera erfasst werden, sodass entsprechenden Manipulationsversuchen auf einfache Weise vorgebeugt werden kann.

Als Transportweg des Kartenlesers wird insbesondere der gesamte Weg von dem Schlitz des Kartenlesers, über den die Magnetstreifen- und/oder Chipkarte eingeführt werden kann, bis hin zu dem Aufnahmebereich, in dem die Karte während des Auslesens der Daten aus dem Magnetstreifen und/oder dem Chip der Magnetstreifen- und/oder Chipkarte aufgenommen ist, vorzugsweise inklusive dieses Aufnahmebereiches, verstanden.

Bei der Erfassungseinheit handelt es sich insbesondere um eine Kamera, vorzugsweise eine Digitalkamera mit deren Hilfe Bilder mit Abbildung eines Erfassungsbereiches der Kamera aufgenommen werden.

Ferner ist vorteilhaft, wenn eine Steuereinheit vorgesehen ist, die ein mit Hilfe der Bilderfassungseinheit aufgenommenes Bild des Kartenlesers mit einem Soll-Bild vergleicht, und wenn die Steuereinheit in Abhängigkeit des Ergebnisses dieses Vergleichs detektiert, ob ein Skimmingmodul im Transportweg aufgenommen ist. Das Soll-Bild ist hierbei insbesondere in der Steuereinheit gespeichert. Die Steuereinheit vergleicht insbesondere Bilddaten des über die Bilderfassungseinheit aufgenommenen Bildes mit gespeicherten Bilddaten des Soll-Bildes und detektierten Abhängigkeit dieses Vergleiches, ob eine Abweichung zwischen den Bildern besteht, die darauf schließen lässt, das ein Skimmingmodul in den Transportweg eingeführt wurde.

Für den Bildvergleich arbeitet die Steuereinheit insbesondere ein vorbestimmtes Bildverarbeitungsprogramm ab. Vorzugsweise wird durch die Steuereinheit ein Mustervergleich und/oder ein sogenanntes Matching durchgeführt.

Die Steuereinheit unterteilt das aufgenommene Bild vorzugsweise in mindestens zwei Segmente und vergleicht diese Segmente mit entsprechenden Segmenten des Soll-Bildes. Über diesen Segmentvergleich kann auf einfache Weise ermittelt werden, ob zwischen dem aufgenommenen Bild und dem Soll-Bild eine Abweichung besteht, die auf ein Skimmingmodul zurückgeführt werden kann. Zusätzlich oder alternativ kann die Steuereinheit in dem aufgenommenen Bild die Kontur mindestens eines Objektes ermitteln und mit entsprechenden Konturen in dem Soll-Bild vergleichen. Auch über diese Weise können auf einfache Weise Skimmingmodule innerhalb des Kartenlesers detektiert werden. Als Kontur wird insbesondere der Umriss der Abbildung eines Objektes in den Bildern verstanden.

Zusätzlich oder alternativ kann von der Steuereinheit in dem aufgenommenen Bild mindestens ein Objekt detektiert werden. Insbesondere wird ein solches in einem aufgenommenen Bild detektiertes Objekt über Bildverarbeitungsmechanismen vermessen, wobei die ermittelten Abmessungen mit voreingestellten Sollabmessungen verglichen werden und über eventuell ermittelte Abweichungen auf das Vorhandensein eines Skimmingmoduls geschlossen werden kann. Auch hierüber ist eine einfache zuverlässige Detektion von Skimmingmodulen möglich. Die Bilderfassungseinheit ist insbesondere außerhalb des Kartenlesers aufgenommen, sodass mit ihrer Hilfe ein Bild zumindest eines Teilbereiches der Außenseite des Kartenlesers aufnehmbar ist.

In einem dem Transportweg zumindest teilweise begrenzenden Begrenzungselement sind eine Vielzahl von Durchgangslöchern vorgesehen, die zu einem vorbestimmten Lochmuster angeordnet sind. Hiermit kann der gesamte Transportweg oder zumindest ein großer Bereich davon überwacht werden.

Die Bilderfassungseinheit an einer ersten Seite des Transportweges angeordnet und an einer der ersten Seite gegenüberliegenden zweiten Seite des Transportweges ist eine Lichtquelle zur Durchleuchtung des Kartenlesers vorgesehen. Die Durchgangslöcher werden somit von dem Licht der Lichtquelle durchleuchtet, sodass sie als Gegenlicht wirken. Hierdurch kann auf einfache Weise erkannt werden, ob in dem Transportweg im Bereich mindestens eines der Durchganslöcher ein Objekt, insbesondere ein Skimmingmodul, angeordnet ist, welches verhindert, dass das Licht von der Lichtquelle zur Kamera gelangt.

Die Vorrichtung zum Lesen einer Magnetstreifen- und/oder Chipkarte, wie diese zuvor beschrieben ist, ist insbesondere in einem Geldautomaten, einem automatischen Kassensystem, einer automatischen Tresorkasse und/oder einen Bezahlterminal aufgenommen.

Ferner umfasst die Vorrichtung vorzugsweise eine Informationsausgabeeinheit, mit deren Hilfe, wenn ein Skimmingmodul detektiert wurde, Informationen hierüber ausgegeben werden können. Auf diese Weise wird erreicht, dass zeitnah Gegenmaßnahmen eingeleitet werden können. Vorzugsweise ist die Vorrichtung über eine Datenübertragungsverbindung mit einer zentralen Recheneinheit verbunden, über die eine beauftragte Servicefirma und/oder Sicherheitskräfte informiert werden können. Darüber hinaus kann auch über eine Ausgabeeinheit, beispielsweise einem Bildschirm, der Vorrichtung einer entsprechenden Meldung an eine Bedienperson ausgegeben werden, sodass diese gewarnt ist und keine Magnetstreifen- und/oder Chipkarte in den Kartenleser einführt. Ferner kann das Einführen der Magnetstreifen- und/oder Chipkarte auch mechanisch unterbunden werden.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Figur 1: eine schematische Darstellung eines Geldautomaten;
- Figur 2: eine schematische Darstellung einer Vorrichtung zum Lesen einer Magnetstreifen- und/oder Chipkarte gemäß einer ersten Ausführungsform;
- Figur 3: eine Darstellung eines mit Hilfe der Kamera der Vorrichtung nach Figur 2 aufgenommenen Bildes;
- Figur 4: eine Darstellung des Bildes nach Figur 3 während der Bildverarbeitung;
- Figur 5: eine Darstellung eines weiteren mit Hilfe der Kamera nach Figur 2 aufgenommenen Bildes ohne Skimmingmodul;
- Figur 6: eine Darstellung eines mit Hilfe der Kamera nach Figur 2 aufgenommenen Bildes mit Skimmingmodul;
- Figur 7: eine schematische Darstellung einer Vorrichtung zum Lesen einer Magnetstreifen- oder Chipkarte gemäß einer zweiten Ausführungsform;
- Figur 8: eine stark vereinfachte Darstellung der Funktionsweise der Vorrichtung nach Figur 7;
- Figur 9: eine schematische Darstellung einer Vorrichtung zum Lesen einer Magnetstreifen- und/oder Chipkarte gemäß einer dritten Ausführungsform; und
- Figur 10: eine schematische Darstellung einer Vorrichtung zum Lesen einer Magnetstreifen- und/oder Chipkarte gemäß einer vierten Ausführungsform.

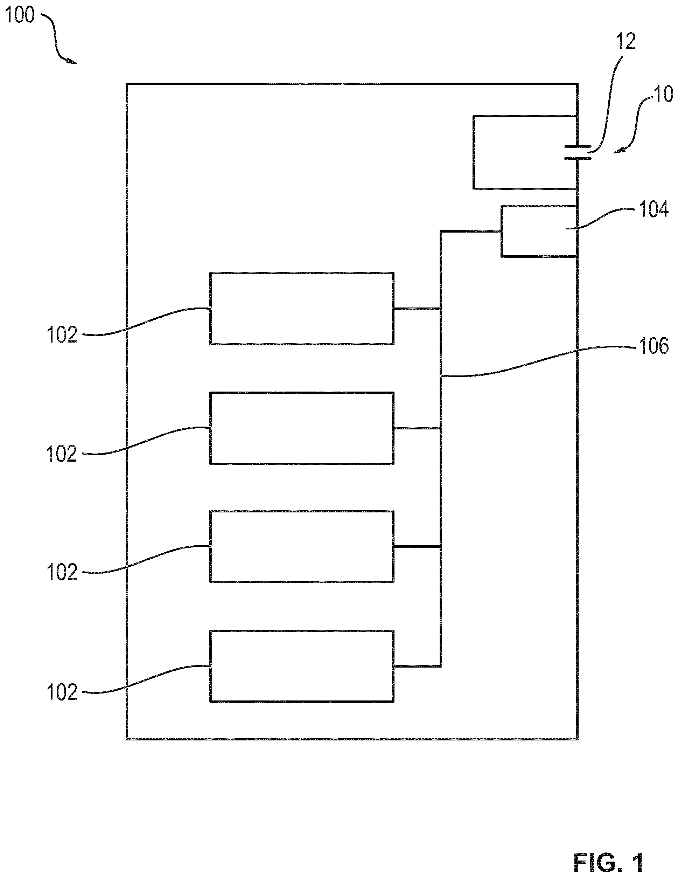

In Figur 1 ist eine schematische Darstellung eines Geldautomaten 100 dargestellt, der eine Vorrichtung 10 zum Lesen einer Magnetstreifen- und/oder Chipkarte umfasst, die über einen Schlitz 12 der Vorrichtung 10 einem Kartenleser 16 der Vorrichtung 10 zugeführt werden kann. Ferner hat der Geldautomat 100 vier Geldkassetten 102 und eine Eingabe- und/oder Ausgabeeinheit 104, über die Wertscheine ausgezahlt und/oder eingezahlt werden können. Hierzu ist die Eingabe- und/oder Ausgabeeinheit 104 über einen Transportpfad 106 mit den Geldkassetten 102 verbunden.

Alternativ kann die Vorrichtung 10 zum Auslesen von Daten einer Magnetstreifen- und/oder Chipkarte auch in jeder anderen beliebigen Vorrichtung, insbesondere einem automatischen Kassensystem, einer automatischen Tresorkassen und/oder einem Bezahlterminals eingesetzt werden. Bei der Magnetstreifen und/oder Chipkarte handelt es sich insbesondere um eine EC-Karte, eine Kreditkarte und/oder eine Geldkarte.

Bei neuartigen Skimmingangriffen wird über den Schlitz 12 in den Transportweg 14 des Kartenlesers 16 der Vorrichtung 10 ein Skimmingmodul eingeführt, mit dessen Hilfe die Daten einer eingeführten Magnetstreifen- und/oder Chipkarte ausgelesen werden können. Ferner wird, beispielsweise über eine verdeckt angebrachte Kamera und/oder ein auf Tastatur des Geldautomaten 100 angebrachten zusätzlichen Tastatur, die PIN, die zur Magnetkarten- und/oder Chipkarte gehört, ausgespäht, sodass eine den Skimmingangriff durchführende Person sowohl die Daten der Magnetstreifen- und/oder Chipkarte als auch die PIN kennt und somit unberechtigt Geld abheben kann und/oder Einkäufe tätigen kann.

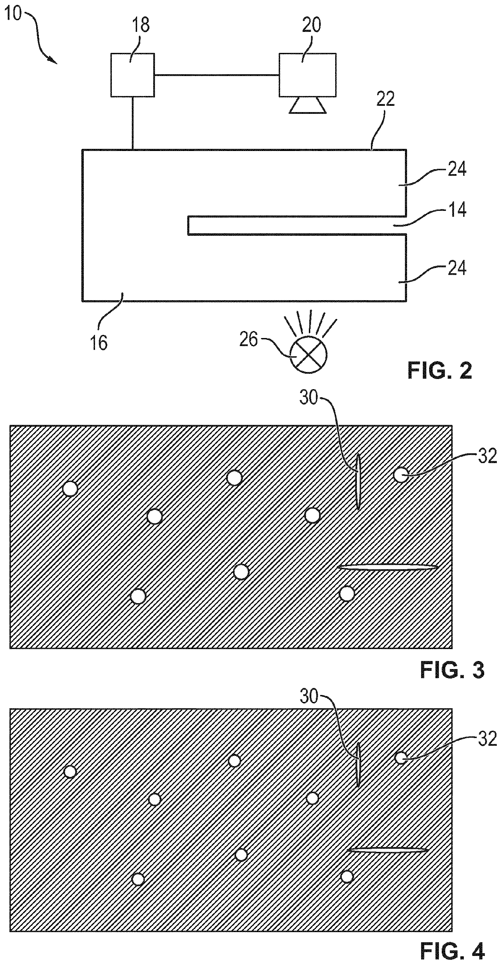

Solche innerhalb des Transportweges 14, in dem normalerweise lediglich die Magnetstreifen- und/oder die Chipkarte während des Auslesens durch den Kartenleser und/oder bei Zuführen und/oder Entnehmen der Magnetstreifen- und/oder Chipkarte aufgenommen ist, aufgenommene Skimmingmodule können nicht durch bekannte Skimmingabwehrmaßnahmen, die darauf ausgelegt sind, Skimmingmodule, die vor dem Schlitz 12 angebracht sind, zu erkennen, detektiert werden. Um aber auch solche innerhalb des Transportweges 14 angeordneten Skimmingmodul detektieren zu können, werden die im Folgenden im Zusammenhang mit den Figuren 2 bis 10 beschriebenen Verfahren und Vorrichtungen zur Skimmingabwehr angewandt.

In Figur 2 ist eine schematische Darstellung einer Vorrichtung 10 zum Auslesen einer Magnetstreifen- und/oder Chipkarte gemäß einer ersten Ausführungsform dargestellt. Die Vorrichtung 10 umfasst neben dem Kartenleser 16 mit dem Transportweg 14 eine Steuereinheit 18 sowie eine als Kamera 20 ausgebildete Bilderfassungseinheit. Mit Hilfe der Kamera 20 werden Bilder mit Abbildungen der Außenseite 22 des Kartenlesers 16 aufgenommen. Hierbei ist zumindest in einem Teilbereich des den Transportweg 14 begrenzenden Begrenzungselements 24 ein Lochmuster vorgesehen. An der der Kamera 20 gegenüberliegenden Seite des Transportpfades 14 ist eine Lichtquelle 26 angeordnet, mit deren Hilfe das Lochmuster durchleuchtet wird, sodass, sofern in den Transportweg 14 kein Objekt eingeführt ist, das entsprechende Lochmuster als helle Punkte in dem von der Kamera 20 aufgenommenen Bild dargestellt werden. In Figur 3 ist ein mit Hilfe der Kamera 20 aufgenommenes Bild mit der Abbildung des durch die Lichtquelle 20 durchleuchteten Bereichs dargestellt. Die einzelnen Durchgangslöcher des Lochmusters sind hierbei als helle Elemente dargestellt, von denen zwei beispielhaft mit dem Bezugszeichen 30, 32 bezeichnet sind.

Die Steuereinheit 18 arbeitet insbesondere ein Bildverarbeitungsprogramm ab, mit dessen Hilfe das über die Kamera 20 aufgenommene Ist-Bild mit einem voreingestellten Soll-Bild des Lochmusters vergleicht. Über diesen Vergleich kann die Steuereinheit auf einfache Weise ermitteln, ob in dem Transportweg 14 ein Skimmingmodul eingeführt ist. Ist nämlich ein Skimmingmodul eingeführt, so ist mindestens eines der Löcher des Lochmusters verdeckt, sodass durch dieses kein Licht der Lichtquelle 26 hindurchtreten kann und dieses Loch entsprechend nicht in dem mit Hilfe der Kamera 20 aufgenommenen Bild abgebildet wird.

Es ist besonders vorteilhaft, wenn die unterschiedlichen Vorrichtungen 10 jeweils unterschiedliche Lochmuster eingesetzt werden, sodass die die Skimmingangriffe durchführenden Personen die Form ihrer Skimmingmodule nicht an die Lochmuster anpassen können und somit Skimmingmodule zuverlässig detektiert werden können.

In Figur 4 ist eine schematische Darstellung des Ist-Bildes nach Figur 3 während der Bildverarbeitung durch die Steuereinheit dargestellt. Bei der Bildverarbeitung werden insbesondere Abstände zwischen den Löchern vermessen um somit die Position der Löcher zu bestimmen. Alternativ oder zusätzlich können auch andere Mustererkennungsverfahren und/oder Matching-Verfahren verwendet werden.

Bei einer alternativen Ausführungsform können zusätzlich oder alternativ zu den Lochmustern auch Teilbereiche der Begrenzungselemente 24 teiltransparent ausgebildet sein, sodass durch diese transparenten Bereiche hindurch ein Bild des Inneren des Kartenlesers, insbesondre des Transportweges 14, über die Kamera 20 aufgenommen werden kann.

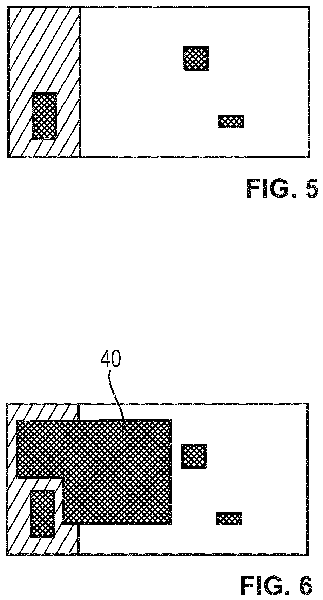

In Figur 5 ist ein solches über die Kamera 20 aufgenommenes Bild dargestellt, wobei das in Figur 5 gezeigte Bild den Zustand zeigt, wenn kein Skimmingmodul in den Transportweg 14 aufgenommen ist. Figur 6 dagegen zeigt ein über die Kamera 20 aufgenommenes Bild, wenn ein Skimmingmodul in dem Transportweg 14 aufgenommen ist. Wie der Vergleich der Figuren 5 und 6 zeigt ist in diesem Fall ein eckiges dunkles Objekt 40 in dem Bild in Figur 6 erkennbar, welches in Figur 5 nicht vorgesehen ist. Dieses Objekt 40 resultierte daraus, dass durch das Skimmingmodul das Licht der Lichtquelle 24 an dieser Stelle nicht oder nicht so stark durchleuchten kann und somit von der Kamera 20 ein dunkler Bereich aufgenommen wird.

Die Steuereinheit 10,führt insbesondere eine Segmentanalyse durch, bei der die mit Hilfe der Kamera 20 aufgenommenen Bilder in Segmente eingeteilt werden und diese Segmenten mit vorbestimmten Segmenten von gespeicherten Soll-Bildern verglichen werden. Zusätzlich oder alternativ kann auch eine Konturermittlung von aufgenommenen Objekten erfolgen und somit ein Vergleich von Konturen stattfinden. Zusätzlich oder alternativ können die ermittelten Objekte auch vermessen werden und/oder deren Position bestimmt werden. Über die entsprechenden gewonnenen Bildinformationen bei der Bildverarbeitung kann über den Vergleich zwischen dem aufgenommenen Ist-Bild und vorbestimmten Soll-Werten jeweils zuverlässig erkannt werden, ob ein Skimmingmodul bzw. ein andersartiges, nicht planmäßig vorgesehenes Objekt in dem Transportweg 14 angeordnet ist.

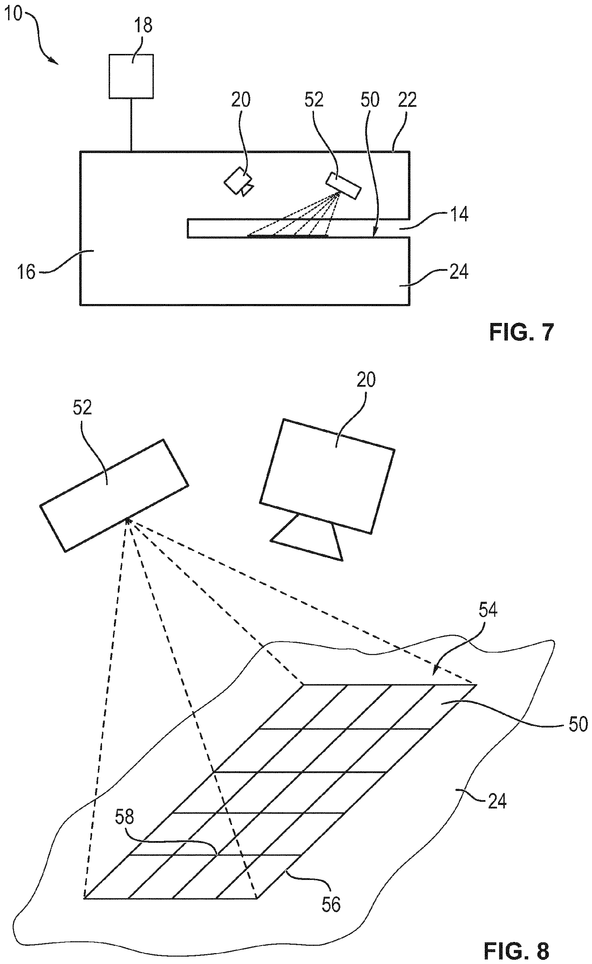

In Figur 7 ist eine schematische Darstellung einer Vorrichtung 10 zum Lesen einer Magnetstreifen- und/oder Chipkarte gemäß einer zweiten, nicht beanspruchten, Ausführungsform dargestellt. Bei dieser zweiten Ausführungsform ist die Kamera 20 innerhalb des Kartenlesers 16 angeordnet, sodass mit ihrer Hilfe ein Bild mit einer Abbildung zumindest eines Teilbereiches der den Transportweg 14 begrenzenden Oberfläche 50 des Begrenzungselementes 24 aufgenommen werden kann. Ferner ist eine Projektionseinheit 52 vorgesehen, mit deren Hilfe auf der Oberfläche 50 des Begrenzungselementes 24 zumindest in einem Teilbereich ein vorbestimmtes Muster 54 projiziert wird. In Figur 8 ist eine schematische, stark vereinfachte Darstellung dieses Funktionsprinzips dargestellt.

Das Muster 54 ist bei dem in Figur 8 gezeigten Beispiel als ein Netz mit sich orthogonal schneidenden Netzlinien 56 dargestellt. Wird ein Skimmingmodul in den Transportweg 14 eingeführt, so verändert sich die Oberflächenbeschaffenheit der Oberfläche, auf die das Muster 54 projiziert wird. Hierdurch ändert sich auch die Position der Kreuzungspunkte 58, an denen sich die Netzlinien 56 schneiden. Über einen Vergleich der in dem über die Kamera 20 aufgenommenen Bildes ermittelten Positionen der einzelnen Schnittpunkte und der Soll-Positionen gemäß des vorbestimmten Soll-Bildes kann einfach detektiert werden, wenn ein Skimmingmodul eingeführt ist.

Bei einer alternativen Ausführungsform kann auch jedes andere beliebige Muster projiziert werden, welches es ermöglicht, über die Bestimmung von Veränderungen des Musters in der durch die Kamera 20 ermittelten Abbildungen ein Objekt im Bereich des Musters 54 zu detektierten.

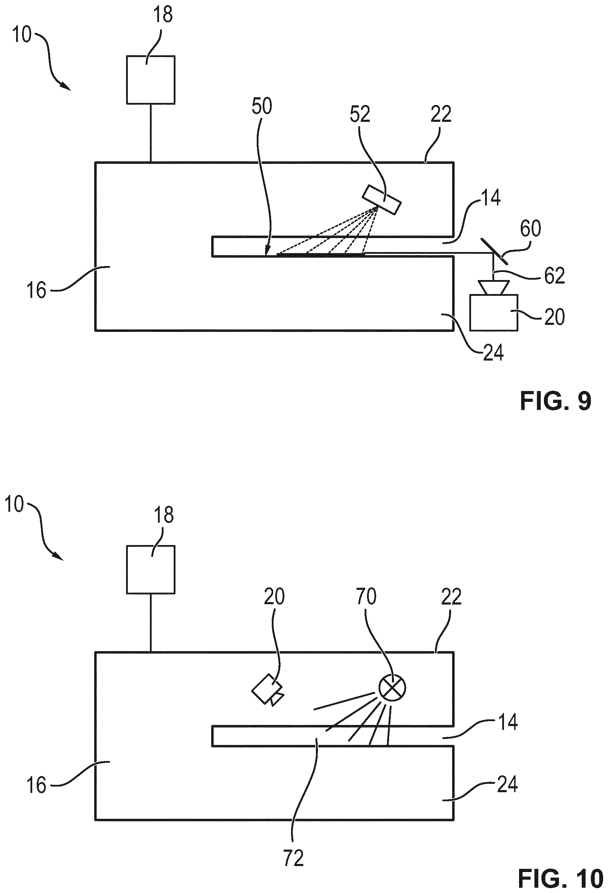

In Figur 9 ist eine Darstellung einer Vorrichtung 10 einer Magnetstreifen- und/oder Chipkarte gemäß einer dritten, nicht beanspruchten, Ausführungsform dargestellt. Bei dieser Ausführungsform ist, im Unterschied zu der Ausführungsform in Figur 7, die Kamera 20 nicht innerhalb des Kartenlesers 16 angeordnet, sondern befindet sich außerhalb des Kartenlesers 16. Bei dieser Ausführungsform ist ein optisches Umlenkelement 60, beispielsweise ein Umlenkprisma vorgesehen, mit dessen Hilfe der über die Linie 62 angedeutete Erfassungsbereich der Kamera 20 derart umgelenkt wird, dass mit Hilfe der Kamera 20 ein Bild mit einer Abbildung des projizierten Musters 54 aufgenommen werden kann.

In Figur 10 ist eine schematische Darstellung einer Vorrichtung 10 zum Lesen einer Magnetstreifen- und/oder Chipkarte mit einer vierten, nicht beanspruchten, Ausführungsform dargestellt. Bei dieser vierten Ausführungsform ist innerhalb des Kartenlesers 16 eine Lichtquelle 70 vorgesehen, mit deren Hilfe ein gepulstes Licht auf zumindest einen Teilbereich 72 des Transportweges ausgesandt wird. Mit Hilfe der Kamera 20 wird mindestens ein Bild mit einer Abbildung dieses Teilbereichs 72 aufgenommen, wobei die Bildaufnahmen über die Kamera 20 mit dem gepulsten Licht der Lichtquelle 70 synchronisiert ist. Hierdurch wird erreicht, dass auf einfache Weise Abstände innerhalb des Teilbereichs 72 in den über die Kamera 20 aufgenommenen Bildern ermittelt werden können, sodass über Abweichungen zwischen ermittelten Abständen und vorbestimmte, planmäßige Abständen auf einfache Weise das Vorhandensein eines Skimmingmoduls in dem Transportweg 14 detektiert werden kann.

Bei einer alternativen Ausführungsform der Erfindung können die einzelnen zuvor beschriebenen Ausführungsformen auch kombiniert werden. Durch das gleichzeitige Anwenden mehrere dieser Ausführungsformen kann die Sicherheit zur Detektion von Skimmingmodulen weiter erhöht werden. Außerdem können auch in verschiedene Teilbereiche des Transportweges parallel zueinander verschiedene der zuvor beschriebenen Ausführungsform angewandt werden.

### Bezugszeichenliste

- 10: Vorrichtung
- 12: Schlitz
- 14: Transportweg
- 16: Kartenleser
- 18: Steuereinheit
- 20: Kamera
- 22: Außenseite
- 26, 70: Lichtquelle
- 30, 32: Durchgangsloch
- 40: Segment
- 50: Oberfläche
- 52: Projektionseinheit
- 54: Muster
- 56: Netzlinie
- 58: Kreuzungspunkt
- 60: Umlenkeinheit
- 62: Erfassungsbereich
- 100: Geldautomat
- 102: Geldkassette
- 104: Eingabe- und/oder Ausgabeeinheit
- 106: Transportpfad

## Patentansprüche

1. Vorrichtung zum Lesen einer Magnetstreifen- und/oder Chipkarte,
mit einem Kartenleser (16) zum Auslesen von Daten aus der Magnetstreifen- und/der Chipkarte, der einen Transportweg (14) umfasst, entlang dessen die Magnetstreifen- und/oder Chipkarte beim Einführen in den Kartenleser (16) und/oder dem Entnehmen aus dem Kartenleser (16) bewegt wird und/oder in dem die Magnetstreifen- und/oder Chipkarte während des Auslesens aufgenommen ist,
und mit einer Bilderfassungseinheit (20) zur Aufnahme von Bildern des Kartenlesers (16),
wobei der Kartenleser (16) derart ausgebildet ist, dass mit Hilfe von durch die Bilderfassungseinheit (20) aufgenommenen Bildern detektierbar ist, ob im Transportweg (14) des Kartenlesers (16) ein Skimmingmodul zum Ausspähen von Daten von Magnetstreifen- und/oder Chipkarten aufgenommen ist,
**dadurch gekennzeichnet, dass** die Bilderfassungseinheit derart angeordnet und ausgebildet ist, dass sie Bilder mit Abbildungen einer Außenseite des Kartenlesers aufnimmt, dass der Transportweg (14) zumindest teilweise von einem Begrenzungselement (24) begrenzt ist,
dass zumindest in einem Teilbereich eines den Transportweg (14) begrenzenden Begrenzungselements (24) ein Lochmuster mit einer Vielzahl von Durchgangslöchern (30, 32) vorgesehen ist,
dass das von der Bilderfassungseinheit (20) aufgenommene Bild zumindest den Bereich dieses Lochmusters (30, 32) abbildet, wobei die Bilderfassungseinheit (20) durch die Durchgangslöcher (30, 32) hindurch ein Bild des Transportpfades erfssst,
dass die Bilderfassungseinheit (20) an einer ersten Seite des Transportweges (14) angeordnet ist, und dass an einer der ersten Seite gegenüberliegenden zweiten Seite des Transportweges (14) eine Lichtquelle (26) zur Durchleuchtung des Lochmusters vorgesehen ist, und
dass das Lochmuster als helle Punkte auf dem von der Bilderfassungseinheit (20) aufgenommenen Bild dargestellt ist.

2. Vorrichtung (10) nach Anspruch 1, **dadurch gekennzeichnet, dass** eine Steuereinheit (18) vorgesehen ist, die ein mit Hilfe der Bilderfassungseinheit (20) aufgenommenes Bild des Kartenlesers (16) mit einem in ihr gespeicherten Soll-Bild vergleicht, und dass die Steuereinheit (18) in Abhängigkeit des Ergebnisses dieses Vergleichs detektiert, ob ein Skimmingmodul im Transportweg (14) aufgenommen ist.

3. Vorrichtung (10) nach Anspruch 2, **dadurch gekennzeichnet, dass** die Steuereinheit (18) für den Bildvergleich ein vorbestimmtes Bildverarbeitungsprogramm abarbeitet.

4. Vorrichtung (10) nach Anspruch 2 oder 3, **dadurch gekennzeichnet, dass** die Steuereinheit (18) das aufgenommene Bild in mindestens zwei Segmente unterteilt und mit entsprechenden Segmenten des Soll-Bildes vergleicht, mindestens eine Kontur im aufgenommenen Bild ermittelt und mit Konturen im Soll-Bild vergleicht, mindestens eine Objekt in dem aufgenommenen Bild detektiert und/oder mindestens ein im aufgenommenen Bild detektiertes Objekt vermisst und mit voreingestellten Soll-Abmessungen vergleicht.

## Claims

1. Device for reading a magnetic stripe and/or smart card,
comprising a card reader (16) for reading out data from the magnetic stripe and/or smart card, which comprises a transport path (14), along which the magnetic stripe and/or smart card is moved when inserted into the card reader (16) and/or when removed from the card reader (16), and/or in which the magnetic stripe and/or smart card is received during read-out,
and comprising an image capture unit (20) for recording images of the card reader (16),
wherein the card reader (16) is configured in such a way that, with the aid of images recorded by the image capture unit (20), it is possible to detect whether a skimming module for spying out data from magnetic stripes and/or smart cards is received in the transport path (14) of the card reader (16),
**characterized in that** the image capture unit is arranged and configured in such a way that it records images with representations of an exterior of the card reader,
**in that** the transport path (14) is at least partly delimited by a delimiting element (24),
**in that** a hole pattern having a multiplicity of through holes (30, 32) is provided at least in a partial region of a delimiting element (24) delimiting the transport path (14),
**in that** the image recorded by the image capture unit (20) represents at least the region of said hole pattern (30, 32), wherein the image capture unit (20) captures an image of the transport path through the through holes (30, 32),
**in that** the image capture unit (20) is arranged at a first side of the transport path (14), and **in that** a light source (26) for trans-illuminating the hole pattern is provided at a second side of the transport path (14) opposite to the first side, and
**in that** the hole pattern is represented as bright points on the image recorded by the image capture unit (20).

2. Device (10) according to Claim 1, **characterized in that** a control unit (18) is provided, which compares an image of the card reader (16) recorded with the aid of the image capture unit (20) with a desired image stored in said control unit, and **in that**, depending on the result of this comparison, the control unit (18) detects whether a skimming module is received in the transport path (14).

3. Device (10) according to Claim 2, **characterized in that** the control unit (18) executes a predetermined image processing programme for the image comparison.

4. Device (10) according to Claim 2 or 3, **characterized in that** the control unit (18) subdivides the recorded image into at least two segments and compares them with corresponding segments of the desired image, determines at least one contour in the recorded image and compares it with contours in the desired image, detects at least one object in the recorded image and/or measures at least one object detected in the recorded image and compares it with pre-set desired dimensions.

## Revendications

1. Dispositif de lecture de carte à bande magnétique et/ou à puce, comportant
un lecteur de cartes (16) servant à la lecture de données dans la carte à bande magnétique et/ou à puce et qui comprend une voie de transport (14) le long de laquelle la carte à bande magnétique et/ou à puce est déplacée lors de son introduction dans le lecteur de cartes (16) et/ou de son retrait du lecteur de cartes (16) et/ou dans laquelle la carte à bande magnétique et/ou à puce est reçue pendant la lecture,
et une unité d'enregistrement d'images (20) destinée à recevoir les images du lecteur de cartes (16),
le lecteur de cartes (16) étant conçu pour que, à l'aide des images prises par l'unité d'enregistrement d'image (20), on puisse détecter si, dans la voie de transport (14) du lecteur de carte (16), un module de skimming est reçu en vue d'espionner les données des cartes magnétiques et/ou à puces,
**caractérisé en ce que** l'unité d'enregistrement d'image est disposée et conçue pour prendre des images avec des représentations d'une face extérieure du lecteur de carte, la voie de transport (14) est limitée du moins partiellement par un élément de limitation (24),
au moins dans une zone partielle d'un élément de limitation (24) limitant la voie de transport (14), il est prévu un motif perforé comportant une multitude de trous traversants (30, 32),
l'image prise par l'unité d'enregistrement d'images (20) représente au moins la zone de ce motif perforé (30, 32), l'unité d'enregistrement d'images (20) enregistrant à travers les trous traversants (30, 32) une image de la piste de transport,
l'unité d'enregistrement d'images (20) est disposée sur une première face de la voie de transport (14) et **en ce que**, au niveau d'une seconde face opposée à la première face de la voie de transport (14), une source lumineuse (26) permettant d'éclairer à travers le motif perforé est prévue, et
**en ce que** le motif perforé est représenté sous forme de points clairs sur l'image prise par l'unité d'enregistrement d'images (20).

2. Dispositif (10) selon la revendication 1, **caractérisé en ce qu'**il est prévu une unité de commande (18) qui compare une image prise à l'aide de l'unité d'enregistrement d'images (20) du lecteur de cartes (16) avec une image théorique enregistrée à l'intérieur de celle-ci, et **en ce que** l'unité de commande (18) détecte, en fonction du résultat de cette comparaison, si un module de skimming est reçu dans la voie de transport (14) .

3. Dispositif (10) selon la revendication 2, **caractérisé en ce que** l'unité de commande (18), pour la comparaison d'images, exécute un programme prédéfini de traitement d'images.

4. Dispositif (10) selon la revendication 2 ou 3, **caractérisé en ce que** l'unité de commande (18) divise l'image prise en au moins deux segments et la compare avec des segments correspondants de l'image théorique, détermine au moins un contour dans l'image prise et la compare avec des contours de l'image théorique, détecte au moins un objet dans l'image prise et/ou constate qu'il manque au moins un objet détecté dans l'image prise et la compare avec des dimensions théoriques préréglées.
